# EUROPÄISCHE PATENTSCHRIFT

(11) **EP 2 917 022 B1**
(45) Veröffentlichungstag und Bekanntmachung des Hinweises auf die Patenterteilung: **25.04.2018**
(21) Anmeldenummer: 13788961.4
(22) Anmeldetag: 06.11.2013
(51) Int. Cl.: B29C 65/16, B29C 65/00, B29L 31/00

(54) **VORRICHTUNG ZUM LASERDURCHSTRAHLSCHWEISSEN UND VERFAHREN ZUM LASERDURCHSTRAHLSCHWEISSEN**
DEVICE FOR LASER TRANSMISSION WELDING AND METHOD FOR LASER TRANSMISSION WELDING
DISPOSITIF DE SOUDAGE LASER PAR TRANSMISSION ET PROCÉDÉ DE SOUDAGE LASER PAR TRANSMISSION

(30) Priorität: 06.11.2012 DE 102012021602; 06.11.2012 US 201261722912 P
(43) Veröffentlichungstag der Anmeldung: 16.09.2015
(73) Patentinhaber: Fresenius Medical Care Deutschland GmbH, 61352 Bad Homburg (DE)
(72) Erfinder: KUGELMANN, Franz, 66606 St. Wendel/Bliesen (DE); MOSER, Lars, 40591 Düsseldorf (DE); KLEMM, Andreas, 66606 Oberlinxweiler (DE)
(74) Vertreter: Stolmár & Partner Patentanwälte PartG mbB
(86) Internationale Anmeldenummer: PCT/EP2013/073133
(87) Internationale Veröffentlichungsnummer: WO 2014/072326

(56) Entgegenhaltungen:
- EP-A1- 1 508 428
- CN-B- 101 486 255
- CN-Y- 201 151 190
- DE-A1- 4 319 742
- JP-A- 2005 081 396
- KR-B1- 100 936 091

## Beschreibung

Die vorliegende Erfindung betrifft eine Vorrichtung zum Laserdurchstrahlschweißen zweier Kunststofffügeteile sowie ein Verfahren zum Herstellen einer Schweißverbindung zweier Kunststofffügeteile durch Laserdurchstrahlschweißen. Zum formschlüssigen Verbinden von Formteilen aus Kunststoffen, insbesondere aus verschiedenen Kunststoffen, existieren grundsätzlich verschiedene Möglichkeiten. Beispielsweise können zwei Formteile mittels Klebe- oder Schweißverfahren miteinander stoffschlüssig verbunden werden. Ein Beispiel für ein Schweißverfahren ist das Laserdurchstrahlschweißen. Letzteres eignet sich beispielsweise zum Verschweißen von Folien auf biegesteifen Spritzgussteilen, die als Kassettenmodule für die extrakorporale Blutbehandlung verwendet werden. Das grundlegende physikalische Prinzip eines Schweißverfahrens mittels Laser erfordert, dass mindestens ein Teil des eingesetzten Laserlichts von dem Material mindestens eines der beiden miteinander zu verbindenden Formteile zumindest in einem Ausmaß absorbiert wird, dass es in Wärme umgewandelt werden kann und das Material an der durch das Laserlicht erwärmten Stelle durch Erwärmung aufgeschmolzen und dadurch fließfähig wird und eine schlüssige Verbindung mit dem Kunststoffmaterial des zweiten Formteils ermöglicht.

Eine spezielle Form des Laserschweißverfahrens, nämlich das Laserdurchstrahlschweißverfahren, hat gegenüber anderen Schweißverfahren den Vorteil, dass auch komplexe Geometrien der Fügefläche schnell und rationell verschweißt werden können. Bei der Verschweißung kann beispielsweise ein Fügepartner vom Laserstrahl vollständig durchstrahlt werden, d. h. die Laserstrahlung wird nicht absorbiert. Der zweite bzw. Teile des zweiten Fügepartners sollten dann das Laserlicht unter Hitzeentwicklung absorbieren können. Üblicherweise erfolgt die Bestrahlung von der Außenseite eines Fügepartners aus.

Das Schweißverfahren begrenzende Parameter sind die Wellenlänge des verwendeten Laserlichts und das Absorptionsverhalten des Kunststoffes bei dieser Wellenlänge. Insbesondere werden dabei Hochleistungsdiodenlaser mit einer Wellenlänge von 610-840 Nanometern und Nd:YAG-Festkörperlaser mit einer Wellenlänge von etwa 1050 Nanometern entweder im Bereich des sichtbaren Lichts (400-750 Nanometer) bzw. im infraroten Bereich verwendet. Es können allerdings auch CO₂-Gaslaser mit einer Wellenlänge von etwa 11000 Nanometern verwendet werden.

Trifft ein Laserstrahl auf ein zu erwärmendes Kunststoffteil, wird die Laserstrahlung reflektiert, absorbiert und transmittiert. Die Intensitätsabnahme der in den Kunststoff eindringenden Strahlung lässt sich in Abhängigkeit von der Materialtiefe nach dem sogenannten Bouguerschen Gesetz beschreiben. Dabei nimmt die eingekoppelte Intensität exponentiell mit der Materialtiefe ab. Die Grundlagen von Laserschweißverfahren sind beispielsweise bei H. Potente et al., "Laserschweißen von Thermoplasten" (Plastverarbeiter 1995, Nr. 9, S. 42 ff.), F. Becker et al., "Trends bei Serienschweißverfahren" in Kunststoffe 87 (1997, S. 11 ff.) sowie von H. Puetz et al. in Modern Plastics, (1997, S. 121 ff.) dargestellt.

Das Absorptionsverhalten und damit auch die Transmission von einem bei einer bestimmten Wellenlänge Laser-transparenten Polymer bzw. Kunststoff kann z.B. durch das Zumischen von Absorbern gesteuert werden. Derartige Absorber sind beispielsweise Ruß und auch spezielle Farbstoffe, die in den letzten Jahren entwickelt wurden. Eine Reihe von Farbstoffen, die ein derartiges steuerbares Absorptionsverhalten ermöglichen, sind kommerziell erhältlich und wurden speziell dafür entwickelt, Polymermischungen zugemischt zu werden, um eine Laserverschweißung bei definierten Wellenlängen zu ermöglichen. Dafür bieten sich auch die bei I.A. Jones et al. "Use of infrared dyes for Transmission Laser Welding of Plastics" (Tech 2000 Conference Proceedings, S. 1166 ff.) offenbarten Farbstoffe an.

Es gibt grundsätzlich mehrere Möglichkeiten, die vorstehend genannten Absorber in die zu verschweißenden Fügepartner, wie z.B. in eine Folie und in ein Kunststoffhartteil, einzubringen. Als eine erste Möglichkeit wird der Absorber dem Kunststoffhartteil zugesetzt. Beim Verschweißen wird der Laserstrahl von der Folienseite her auf die Anordnung von Folie und Kunststoffhartteil gerichtet. Der Laser durchdringt dabei die für Laserlicht durchlässige Folie und trifft danach auf das Kunststoffhartteil auf. Das Kunststoffhartteil enthält den Absorber und stellt unter Wärmeentwicklung eine Schweißverbindung mit der Folie her. Eine weitere Möglichkeit besteht darin, den Absorber als funktionelle Beschichtung zwischen dem Kunststoffhartteil und der Folie aufzubringen, wie z.B. mit einem Druckverfahren. Alternativ kann der Absorber auch in die Folie eingemischt werden, um beim Laserdurchstrahlschweißen die erforderliche Schweißtemperatur zu erzeugen.

Der Begriff "Aufschmelzen" des Materials wird vorliegend nicht als thermodynamisches Schmelzen im Sinne eines Phasenübergangs verstanden, sondern als Erweichen des Materials und des Erreichens eines plastischen Verarbeitungsvermögens unter den Schweißbedingungen. Von dem Begriff des "Aufschmelzens" kann auch das thermodynamische Schmelzen teilkristalliner Polymere in einem Folienverbund umfasst sein.

Beim Verschweißen von Kunststoffen muss nicht nur Schmelzenergie in das Material eingebracht werden, es muss auch eine Fügekraft auf die zu verbindenden Fügeteile an der späteren Schweißnaht aufgebracht werden. Beim Laserschweißen kann dies durch Laser-transparente Anpresswerkzeuge oder mittels geeigneter Spannvorrichtungen erfolgen.

Für das Verschweißen von Folien im Laserdurchstrahlverfahren werden die Fügepartner typischerweise gegeneinander verpresst, um einen entsprechenden Fluss der Polymerschmelze unter Wärmeeinwirkung und damit die Verschweißung zu verursachen. Beim Laserdurchstrahlschweißen von flexiblen Materialien, wie z. B. Kunststofffolien, ergibt sich das Problem, dass die Fügepartner selbst keine ausreichende Steifigkeit aufweisen und der Anpressdruck nicht über den Fügepartner selbst auf die Schweißzone geleitet werden kann. Folien müssen für das Laserdurchstrahlschweißen daher durch ein Anpresswerkzeug überdeckt werden, dass den entsprechenden Anpressdruck an der Schweißzone herstellt. Eine direkte Lasereinstrahlung wäre nicht möglich, wenn die Anpresswerkzeuge nicht Laser-transparent ausgestaltet wären.

Laser-transparente Anpresswerkzeuge, die für die Laserverschweißung von Folien verwendet werden, sind bekannt. Es können Glasplatten, Matten, druckbeaufschlagbare Kissen, Druckluft usw. verwendet werden, um aus einer Richtung eine Anpresskraft auf die Fügepartner auszuüben und aus der gleichen Richtung mit einem Laser einzustrahlen, der den Anspressmechanismus optisch durchdringen kann.

Insbesondere ist diese Technologie verfeinert worden, indem mehrschichtige Folien entwickelt wurden, die einen Absorber in einer exponierten Schicht enthalten. Dadurch ist es möglich, durch Absorption des Laserlichts die benötigte Schweißtemperatur lokal begrenzt direkt an der Schweißzone der beiden Fügepartner zu erzeugen. Die Gesamtstabilität des Fügepartners bleibt erhalten, weil es nicht nötig ist, das gesamte Fügeteil an der Schweißzone aufzuschmelzen. Letzteres ist bei dem bislang verwendeten CO₂-Laserschweißen der Fall gewesen. Die Absorption der CO₂-Laserenergie erfolgt bei diesem Verfahren durch das Kunststoffmaterial selbst und verursacht ein Aufschmelzen nicht nur in der Kontaktzone der Fügepartner. Durch die Verwendung von Absorbermaterialien ist es möglich, ein höherenergetisches Laserlicht zu verwenden, weil die Erzeugung der Absorptionsenergie lokal eng begrenzt ist. In der Produktion sind dadurch höher Taktraten erreichbar.

In der Produktion von Kassettenmodulen, die für die extrakorporale Blutbehandlung oder die peritoneale Dialyse Verwendung finden, werden Folien auf einen biegesteifen Kassettenkörper geschweißt (z.B. WO 2010/121819, EP 0 956 876). Dabei muss der Laserspot in einem Konturschweißverfahren genaue Pfade abfahren, um die Verbindung zwischen Kassettenkörper und Folien in nur vorbestimmten Abschnitten zu ermöglichen. Als Anpressmittel wird für diese Schweißverfahren z. B. die schon erwähnte Anpressung über eine Silikonmatte gewählt. Das zugehörige Schweißverfahren ist in der WO 2010/015380 beschrieben. Alternativ kann eine Anpressung auch über Druckluft erfolgen.

Die bislang bewährten Schweißverfahren weisen jedoch jeweils Nachteile auf. Die Anpressung über Druckluft ermöglicht es nicht, einen hohen Anpressdruck aufzubauen. Der Nachteil wird ausgeglichen, indem eine stärkere Aufschmelzung der Fügepartner in Kauf genommen wird. Allerdings verlängern sich dadurch die Fertigungszeiten für die Herstellung der Kassettenmodule, was in der Produktion nachteilig ist.

Die Anpressung über die Silikonmatte führt dazu, dass eine hochreine Atmosphärenumgebung und Materialien verwendet werden müssten, um eine ausreichend annehmbare Fertigungszeit der Schweißstellen zu erreichen. Eingeschlossene Partikel in der Silikonmatte oder Partikel, die sich durch elektrostatische Adsorption auf den Oberflächen der Fügepartner befinden, entwickeln unter Absorption des Lasers eine so hohe thermische Energie, dass die Fügepartner durchbrennen. Dementsprechend muss die Laserenergie herabgesetzt werden, um die mögliche Zerstörungen der Fügepartner zu umgehen, womit die Fertigungszeiten zu lang werden würden.

Bekannt sind ebenfalls ferner Schweißvorrichtungen, bei denen das Laserlicht durch eine transparente Glaskugel auf die Fügepartner geleitet wird. Die transparente Glaskugel ist dabei rollbar gelagert. Die gesamte Vorrichtung wird über die Glaskugel auf die Fügepartner aufgesetzt, so dass der Anpressdruck durch die Glaskugel direkt auf die Schweißzone ausgeübt wird. Die Vorrichtung kann auf der Glaskugel rollend verfahren/bewegt werden, so dass vorbestimmte Konturen abgefahren und verschweißt werden können. Nachteilig an dem bisherigen System ist, dass diese Vorrichtung durch ihr hohes Gewicht relativ träge ist und für die Verschweißung von relativ leichten Fügeteilen, z. B. Folien und Spritzgussteile, schlecht geeignet ist.

Die EP 1 405 713 beschreibt eine bekannte Vorrichtung zur Verschweißung mittels einer rollbar gelagerten Glaskugel. Die Glaskugel ist in einem Schaft gelagert, der durch eine Feder von der restlichen Vorrichtung mechanisch entkoppelt ist. Bei diesem System ist der entkoppelte Teil mit der Glaskugel zu träge, um ein Konturschweißen an einem Kassettenmodul durchführen zu können. Durch die träge Konstruktion kann die Glaskugel im Konturverlauf Unebenheiten an den Fügepartnern nicht folgen, ohne Mikrosprünge zu machen.

Die EP 1 440 784 beschreibt eine Vorrichtung mit einer transparenten Glaskugel, die in einem Schaftteil gelagert ist. Ein heißer Gasstrom, der an den Seiten der Glaskugel vorbeigeführt wird, wärmt die Fügeteile vor. Da die Glaskugel in einer größeren Vorrichtung gelagert ist, besitzt die Vorrichtung eine hohe Trägheit. Die EP 1 508 428 offenbart eine Vorrichtung zum Laserdurchstrahlschweißen zweier Kunststofffügeteile, wobei mindestens eines der Kunststofffügeteile einen Absorber für Laserlicht enthält, umfassend einen Bearbeitungskopf mit einer Bearbeitungsseite, einem bearbeitungsseitigen Austrittsschaft für mindestens einen Laserstrahl, und einem Laser-transparenten Anpressmittel zum Aufeinander-Pressen der Kunststofffügeteile. Ähnliche Vorrichtungen sind in CN 201 151 190, JP 2005 081396, KR 100 936 091 und DE 43 19 742 offenbart.

Die hohen Massen und Trägheiten der Bearbeitungsköpfe bekannter Schweißvorrichtungen und die dabei eingesetzte Glasfasereinkopplung des Laserlichts führen zu Schweißprozessen mit relativ hohen, nicht erwünscht einstellbaren Anpresskräften, einer geringen Dynamik und einem langsamen Ansprechverhalten. Es besteht daher ein Bedarf an einem Schweißverfahren zum Laserdurchstrahlschweißen, mit dem eine erwünschte Anpresskraft auf ein zu verschweißendes Fügeteil, z.B. eine Folie, ausgeübt und eine fehlerfreie Verschweißung in kurzer Fertigungszeit erzielt werden kann.

Die Aufgabe der Erfindung ist daher, eine Vorrichtung und ein Verfahren anzugeben, mit denen ein Laserdurchstrahlverschweißen von Kunststofffügeteilen präzise und in kurzer Zeit ausgeführt werden kann.

Gelöst wird diese Aufgabe durch eine Vorrichtung zum Laserdurchstrahlschweißen gemäß Anspruch 1 und ein Verfahren zum Herstellen einer Schweißverbindung zweier Kunststofffügeteile durch Laserdurchstrahlschweißen gemäß Anspruch 5.

Erfindungsgemäß ist eine Vorrichtung zum Laserdurchstrahlschweißen zweier Kunststofffügeteile vorgesehen, wobei mindestens eines der Kunststofffügeteile einen Absorber für Laserlicht enthält, umfassend einen Bearbeitungskopf mit einer Bearbeitungsseite, einem bearbeitungsseitigen Austrittsschaft für mindestens einen Laserstrahl, und einem Laser-transparenten Anpressmittel zum Aufeinander-Pressen der Kunststofffügeteile; wobei das Laser-transparente Anpressmittel in dem Austrittsschaft von dem Bearbeitungskopf entkoppelt geführt ist und in Richtung und in Gegenrichtung der Bearbeitungsseite bewegbar ist; und wobei der Austrittsschaft einen Innendurchmesser besitzt und das Anpressmittel einen Außendurchmesser besitzt, der kleiner ist als der Innendurchmesser des Austrittschafts; und wobei der Austrittsschaft eine Austrittsöffnung für den Laserstrahl besitzt, die Austrittsöffnung einen Durchmesser besitzt und das Anpressmittel einen Außendurchmesser besitzt, der dem Durchmesser der Austrittsöffnung entspricht. Erfindungsgemäß ist ferner ein Verfahren zum Herstellen einer Schweißverbindung zweier Kunststofffügeteile durch Laserdurchstrahlschweißen vorgesehen, wobei mindestens eines der Kunststofffügeteile einen Absorber für Laserlicht enthält, umfassend aufeinander Anordnen der zwei Kunststofffügeteile; Aufeinander-Pressen und Bestrahlen der aufeinander angeordneten Kunststofffügeteile mit Laserlicht unter Einsatz einer erfindungsgemäßen Vorrichtung; wobei im Bearbeitungskopf der Vorrichtung das Laser-transparente Anpressmittel in dem Austrittsschaft von dem Bearbeitungskopf entkoppelt geführt wird. Ferner ist ein Verbundteil angegeben, umfassend zwei miteinander verschweißte Kunststofffügeteile, das gemäß dem Verfahren der vorstehenden Ausführungsform erhältlich ist. Ein solches Verbundteil kann für die extrakorporale Blutbehandlung oder peritoneale Dialyse verwendet werden. Die erfindungsgemäßen Ausführungsformen ermöglichen, dass das Anpressmittel nicht ortsfest in dem Austrittsschaft gelagert ist, vielmehr ist das Anpressmittel vom Austrittsschaft entkoppelt vorgesehen. Das Anpressmittel ist nur von den Austrittsschaft umschlossen. Die für das Verschweißen der Kunststofffügeteile erforderliche Anpresskraft und der dafür erforderliche Anpressdruck können daher gering gehalten und fein dosiert werden. Auf diese Weise können kleine Anpresskräfte erzeugt werden, die insbesondere zur Verschweißung von leichten, dünnen und/oder sehr flexiblen Fügeteilen geeignet sind. Weitere Merkmale und Zweckmäßigkeiten ergeben sich aus der folgenden Beschreibung von Ausführungsformen, den Figuren und den Unteransprüchen.

In der nachfolgenden Beschreibung von Ausführungsformen werden die Begriffe "Kunststofffügeteil" und "Fügeteil" synonym verwendet.

Wie oben erläutert, betrifft die Erfindung eine Vorrichtung zum Laserdurchstrahlschweißen zweier Kunststofffügeteile, wobei mindestens eines der Kunststofffügeteile einen Absorber für Laserlicht enthält, umfassend einen Bearbeitungskopf mit einer Bearbeitungsseite, einem bearbeitungsseitigen Austrittsschaft für mindestens einen Laserstrahl und einem Laser-transparenten Anpressmittel zum Aufeinander-Pressen der Kunststofffügeteile, wobei das Laser-transparente Anpressmittel in dem Austrittsschaft von dem Bearbeitungskopf entkoppelt geführt ist. Die Vorrichtung kann auch zum Laserdurchstrahlschweißen von mindestens zwei, d.h. von mehr als zwei Kunststofffügeteilen dienen.

Der Begriff "entkoppelt" umfasst erfindungsgemäß, dass das Anpressmittel in dem Bearbeitungskopf und/oder in dem Austrittsschaft frei beweglich ist. Ferner umfasst der Begriff "entkoppelt", dass das Anpressmittel in dem Bearbeitungskopf und/oder in dem Austrittsschaft ohne ortsfeste Lagerung vorgesehen ist. Das Anpressmittel kann daher in dem Bearbeitungskopf und/oder in dem Austrittsschaft, insbesondere in Richtung und in Gegenrichtung der Bearbeitungsseite, bewegbar und/oder verschiebbar sein.

Da das Anpressmittel vom Bearbeitungskopf entkoppelt vorgesehen ist, kann die durch das Anpressmittel ausgeübte Anpresskraft fein eingestellt und dosiert werden. Die für das Verschweißen der Kunststofffügeteile erforderliche Anpresskraft wird durch das Eigengewicht des Anpressmittels realisiert. Ferner wird der Einfluss des restlichen Bearbeitungskopfes auf die Anpresskraft gering gehalten. Auf diese Weise können kleine, sehr präzise und/oder konstante Anpresskräfte erzeugt werden, die insbesondere zur Verschweißung von leichten, dünnen und/oder sehr flexiblen Fügeteilen, z.B. Folien, geeignet sind. Daher kann beim Verschweißen der Fügeteile ein Stick-Slip-Effekt, auch Haftgleiteffekt genannt, d.h. das Ruckgleiten von gegeneinander bewegten Festkörpern vermieden werden. Zum Beispiel wird eine unerwünschte Faltenbildung in einer zu verschweißenden flexiblen Folie an der herzustellenden Schweißnaht vermieden.

Desweiteren stellt im Wesentlichen die Masse des Anpressmittels der erfindungsgemäßen Vorrichtung die ungefederte Masse des Bearbeitungskopfes dar, so dass nur eine geringe ungefederte Masse auf die zu verschweißenden Kunststofffügeteile wirkt. So kann eine sehr fein auf geringste Oberflächenunebenheiten reagierende Anpressung realisiert werden. Daher ist die erfindungsgemäße Vorrichtung insbesondere zur Verschweißung von Fügeteilen mit zwei- und/oder dreidimensionalen Konturen geeignet. Außerdem besitzt das Anpressmittel der erfindungsgemäßen Vorrichtung nur eine geringe träge Masse, so dass die Trägheit des Bearbeitungskopfes insgesamt klein ist. Deshalb kann mit der Vorrichtung ein Laserdurchstrahlschweißen mit sehr hoher Dynamik und hohen Vorschubgeschwindigkeiten, insbesondere auch bei Vorschüben mit Umkehrpunkten, ausgeführt werden. Außerdem sind mit der erfindungsgemäßen Vorrichtung sehr kurze Schweißzyklen realisierbar. Erfindungsgemäß ist das Anpressmittel in Richtung und in Gegenrichtung der Bearbeitungsseite bewegbar. Das Anpressmittel besitzt somit einen Freiheitsgrad in Richtung und in Gegenrichtung der Bearbeitungsseite. Beispielsweise besitzt der Austrittsschaft eine Längsachse in Richtung der Bearbeitungsseite und das Anpressmittel ist parallel zur Längsachse des Austrittsschaftes bewegbar und/oder verschiebbar. Dies ermöglicht, dass das Anpressmittel im Austrittsschaft axial bewegbar und/oder verschiebbar geführt ist. Dadurch kann ein Toleranzausgleich sowohl hinsichtlich der Anpresskraft als auch hinsichtlich einer Höhenvariation der zu verschweißenden Stelle erfolgen. Das Anpressmittel kann zudem ausschließlich parallel zur Längsachse des Austrittsschaftes bewegbar und/oder verschiebbar sein. Erfindungsgemäß besitzt der Austrittsschaft einen Innendurchmesser und das Anpressmittel einen Außendurchmesser, der kleiner ist als der Innendurchmesser des Austrittschafts. Dies ermöglicht, dass das Anpressmittel innerhalb des Austrittsschaftes vom Bearbeitungskopf entkoppelt bewegt werden kann.

Der Austrittsschaft kann beispielsweise einen Hohlraum besitzen, in und/oder von dem das Anpressmittel geführt ist. Der Hohlraum kann ferner zylinderförmig oder röhrenförmig ausgebildet sein. Außerdem kann sich der Hohlraum im Wesentlichen über die gesamte Länge des Austrittsschafts erstrecken. In diesen Fällen kann das Anpressmittel durch die den Hohlraum bildenden Innenwände des Austrittsschafts geführt sein/werden. Dabei kann der Durchmesser des Hohlraums den Innendurchmesser des Austrittsschafts darstellen. Erfindungsgemäß besitzt der Austrittsschaft eine Austrittsöffnung für den Laserstrahl, die Austrittsöffnung besitzt einen Durchmesser und das Anpressmittel besitzt einen Außendurchmesser, der dem Durchmesser der Austrittsöffnung entspricht. Bewegt sich das Anpressmittel in die Austrittsöffnung, wird das Anpressmittel an der Stelle des Außendurchmessers, der dem Durchmesser der Austrittsöffnung entspricht, in der Austrittsöffnung zurückgehalten, z.B. durch Form- und/oder Kraftschluss. Dadurch wird vermieden, dass das Anpressmittel den Austrittsschaft vollständig verlässt. Ferner können das Anpressmittel und die Austrittsöffnung aus Materialien bestehen, die aufeinander gleitfähig sind. So wird ermöglicht, dass nach einem kraftschlüssigen Festhalten des Anpressmittels dieses wieder aus der Austrittsöffnung gelöst und in den Austrittschaft bewegt werden kann. In einem Beispiel kann das Anpressmittel aus Glas bestehen und die Begrenzungen der Austrittsöffnung können Teflon umfassen. In Ausführungsformen kann der Austrittsschaft 14 aus einem für Trockengleitlager geeignetem Material bestehen, zum Beispiel kann er Polytetrafluorethylen, ultrahochmolekulares Polyethylen, Polyoxymethylen oder Polyamid umfassen.

In Ausführungsformen kann das Anpressmittel eine Größe und Dichte aufweisen, aufgrund derer das Anpressmittel selbst die erwünschte Anpresskraft beim Schweißvorgang ausüben kann. Ferner kann das Anpressmittel als Kugel gebildet sein und/oder rollbar gelagert sein. Alternativ kann das Anpressmittel auch als rollbar gelagert Rolle oder als Zylinder mit einem bearbeitungsseitigen halbkugelförmigen Ende ausgeführt sein.

In Ausführungsformen weist das Anpressmittel einen Durchmesser im Bereich von 15 bis 50 mm, bevorzugt 20 bis 40 mm, auf. Die Dichte des Anpressmittels kann ferner im Bereich von 1,5 bis 6 kg/dm³, bevorzugt 2 bis 5 kg/dm³, bevorzugter 3 bis 4 kg/dm³ liegen.

In einer Ausführungsform der Vorrichtung weist der Bearbeitungskopf einen in den Austrittsschaft zu der Bearbeitungsseite gerichteten Druckfluidanschluss für ein das Anpressmittel beaufschlagendes Anpressfluid auf. Die für das Verschweißen der Kunststofffügeteile erforderliche Anpresskraft kann daher durch ein auf das Anpressmittel einwirkendes Druckfluid, insbesondere Druckluft oder ein Druck-Inertgas, erzeugt oder verstärkt werden. Dadurch wird die Feineinstellung der Anpresskraft gefördert.

Der Bearbeitungskopf und/oder der Austrittsschaft können desweiteren optische Einrichtungen zum Einleiten, Führen, Fokussieren und/oder Formen des Laserstrahls aufweisen. Hierfür können optische Einrichtungen im Bearbeitungskopf und/oder der Austrittsschaft vorgesehen sein. Beispielsweise wird der Laserstrahl mittels einer Glasfaser in den Austrittsschaft eingeleitet. Zum Führen des Laserstrahls können Spiegel eingesetzt werden. Um den Laserstrahl zu fokussieren und/oder zu formen, können ferner Linsen vorgesehen sein.

Einer weitere Ausführungsform gibt ein Verfahren zum Herstellen einer Schweißverbindung zweier Kunststofffügeteile durch Laserdurchstrahlschweißen an, wobei mindestens eines der Kunststofffügeteile einen Absorber für Laserlicht enthält. Das Verfahren umfasst aufeinander Anordnen der zwei Kunststofffügeteile, Aufeinander-Pressen und Bestrahlen der aufeinander angeordneten Kunststofffügeteile mit Laserlicht unter Einsatz einer Vorrichtung nach einer der hier beschriebenen Ausführungsformen, wobei im Bearbeitungskopf der Vorrichtung das Laser-transparente Anpressmittel in dem Austrittsschaft von dem Bearbeitungskopf entkoppelt geführt wird. Das Aufeinander-Pressen und/oder das Bestrahlen der aufeinander angeordneten Kunststofffügeteile mit Laserlicht können lokal erfolgen. Das Verfahren kann auch zum Laserdurchstrahlschweißen von mindestens zwei, d.h. von mehr als zwei Kunststofffügeteilen dienen.

Zum Beispiel werden eine Folie, die einen Absorber enthält, und ein Kunststoffhartteil auf einer Arbeitsfläche aufeinander gelegt. Das Anpressmittel des Bearbeitungskopfes der erfindungsgemäßen Vorrichtung wird auf die zu verbindenden Stellen der so in Kontakt gebrachten Fügeteile aufgesetzt. Durch die dabei mittels des Anpressmittels erzeugte Anpresskraft passt sich die Folie an die Konturen und Oberflächenunebenheiten des Kunststoffhartteils an und wird an die Konturen und Oberflächenunebenheiten des Kunststoffhartteils angedrückt. Da der Anpressdruck des Bearbeitungskopfes erfindungsgemäß gering ist und fein dosiert wird, kann unter Einwirkung des Laserlichts eine glatte Schweißnaht hoher Güte hergestellt werden. Weil zudem auf die Schweißstelle nur eine geringe träge Masse wirkt, kann das Laserdurchstrahlschweißen mit einer hohen Dynamik und einem schnellen Ansprechverhalten durchgeführt werden.

Im Verfahren von Ausführungsformen kann die Anpresskraft und/oder der zugehörige Anpressdruck durch das Eigengewicht des Anpressmittels auf die Kunststofffügeteile erzeugt werden. Zudem kann das Anpressmittel im Austrittsschaft mit einem zur Bearbeitungsseite gerichteten Anpressfdruckfluid, insbesondere mit Druckluft, beaufschlagt werden, um die Anpresskraft zu erzeugen oder zu verstärken.

Beispielsweise wird im Verfahren von Ausführungsformen auf die Kunststofffügeteile eine Anpresskraft im Bereich von 0,01 N bis 1000 N, bevorzugt 1 bis 50 N, ausgeübt. Ferner kann das Anpressmittel mit einem Anpressdruck im Bereich von 0 bis 7 bar, bevorzugt 0,1 bis 70 mbar, beaufschlagt werden. Beispielsweise beträgt die Anpresskraft durch das Eigengewicht des Anpressmittels bis zu ungefähr 4 N. Ferner kann bei Beaufschlagung des Anpressmittels mit einem Anpressdruck von ungefähr 5 bar auf das Anpressmittel eine Anpresskraft bis zu ungefähr 1000 N ausgeübt werden.

Im Verfahren von Ausführungsformen wird das Anpressmittel in Richtung und in Gegenrichtung der Bearbeitungsseite des Bearbeitungskopfes bewegt. Beispielsweise besitzt der Austrittsschaft eine Längsachse in Richtung der Bearbeitungsseite und das Anpressmittel wird parallel zur Längsachse des Austrittsschaftes bewegt und/oder verschoben. Das Anpressmittel kann zudem ausschließlich parallel zur Längsachse des Austrittsschaftes bewegt und/oder verschoben werden. So kann das Anpressmittel im Austrittsschaft axial bewegbar und/oder verschiebbar geführt werden. Dadurch kann ein Toleranzausgleich sowohl hinsichtlich der Anpresskraft als auch hinsichtlich einer Höhenvariation der zu verschweißenden Stelle erfolgen.

Wie oben erläutert, kann in der im Verfahren von Ausführungsformen eingesetzten Vorrichtung der Austrittsschaft ferner einen Hohlraum, bevorzugt einen zylinderförmigen Hohlraum, besitzen, in und/oder vom dem das Anpressmittel geführt wird. Ferner kann als das Anpressmittel eine Kugel eingesetzt werden. Bevorzugt wird das Verfahren unter Schutzgas durchgeführt, um das Auftreten eines Lochbrands während des Laserschweißens zu vermeiden.

Im Verfahren von Ausführungsformen umfassen die Kunststofffügeteile eine Mehrschichtfolie, die eine Fügeschicht aufweist, und ein Kunststoffhartteil, und die Fügeschicht enthält den Absorber für Laserlicht. Durch die Verwendung der Absorber-enthaltenden Fügeschicht wird die Schweißwärme im Wesentlichen nur in der Fügeschicht und in dem an die Fügeschicht angrenzenden Oberflächenbereich des Kunststoffhartteils erzeugt. Dadurch behält die Mehrschichtfolie ihre Formstabilität bei, da nur ein Teil der Mehrschichtfolie durch die Laserlichtabsorption des Absorbers aufgeschmolzen wird. Auf diese Weise wird ein Ausdünnen der Folie oder ein Ausfransen der Schweißnähte vermieden.

Als das Kunststoffhartteil kann im Verfahren von Ausführungsformen ein Hartteil aus einem Kunststoff, bevorzugt aus einem spritzgussfähigem Kunststoff, ausgewählt aus der Gruppe, bestehend aus Polyethylen, Polypropylen, Polyisopren und deren Blends und Copolymere, PET sowie Polycarbonate, eingesetzt werden. Ferner kann als die Fügeschicht der Mehrschichtfolie eine Schicht aus einem Material, ausgewählt aus der Gruppe, bestehend aus Polypropylen, Polyethylen, Polyisopren, olefinische Styrolblockcopolymere, deren Blends sowie Copolymere davon, eingesetzt werden. In Beispielen des Verfahrens kann eine Mehrschichtfolie mit einer Fügeschicht einer Dicke von 10 bis 100 µm eingesetzt werden.

In einer bevorzugten Ausführung, die insbesondere in der Medizintechnik zur Anwendung kommen kann, hat die Fügeschicht eine Dicke von 10-100 µm überwiegend bestehend aus 95-100 % eines Polypropylens ohne Einbezug des Absorbers. Für die Formulierung der Fügeschicht sind je nach Schweißanordnung aber unterschiedliche Polymerblends möglich. Nicht beschränkende Beispiele sind Polymere bzw. Co-Polymere aus C2-C10 Monomeren wie Polyethylen, Polypropylen, Polyisopren, und Butadien, olefinische Styrolblockcopolymere mit Blockcopolymeren aus Styrol etc., wie z.B. SIS, SEBS, SEPS. Diese Beispiele sind kommerziell z.B. unter den Markennamen KRATON® G 1652, KRATON® G 1657, KRATON® G 1726, KRATON®FG 1901 und KRATON®FG 1924 oder Hybrar®, Tuftec® und Septon® erhältlich.

In Ausführungsformen kann als der Absorber für Laserlicht ein IR-Absorber eingesetzt werden, der IR-Strahlung, insbesondere im Bereich von 770 - 1500 nm, absorbiert. Ferner kann der Absorber für Laserlicht in einer Menge von 50 bis 700 ppm, bezogen auf das Gewicht der Fügeschicht, eingesetzt werden. Zudem wird beispielsweise Laserlicht eines Nd:YAG-Lasers und/oder Laserlicht im IR-Bereich, insbesondere im Bereich von 770 - 1500 nm, verwendet. Ebenfalls offenbart ist ein Verbundteil, umfassend zwei miteinander verschweißte Kunststofffügeteile, wobei das Verbundteil gemäß dem Verfahren nach einer der hier beschriebenen Ausführungsformen erhältlich ist. Das Verbundteil kann insbesondere für die extrakorporale Blutbehandlung oder peritoneale Dialyse verwendet werden. Alle hier beschriebenen und sich nicht gegenseitig ausschließenden Merkmale von Ausführungsformen können miteinander kombiniert werden. Elemente einer Ausführungsform können in den anderen Ausführungsformen genutzt werden ohne weitere Erwähnung. Gleiche Elemente von Ausführungsformen sind in der folgenden Beschreibung mit den gleichen Bezugszeichen versehen. Ausführungsformen der Erfindung werden nun durch die nachfolgenden Beispiele anhand von Figuren genauer beschrieben, ohne sie dadurch einschränken zu wollen. Es zeigen:
- Fig. 1: eine schematisch dargestellte Schweißanordnung eines ersten Beispiels; und
- Fig. 2: eine schematisch dargestellte Schweißanordnung eines zweiten Beispiels.

Beispiele der Erfindung werden im Folgenden anhand der Verschweißung einer Mehrschichtfolie, die eine Fügeschicht enthält, mit einem biegesteifen Kassettenkörper beschrieben, ohne die Erfindung darauf zu begrenzen.

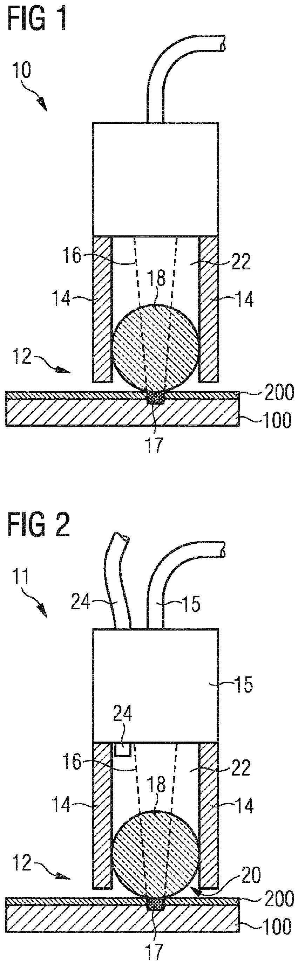

Das in Fig. 1 schematisch dargestellte Beispiel einer Schweißanordnung umfasst ein Kunststoffhartteil 100, eine auf dem Kunststoffhartteil 100 angeordneten Mehrschichtfolie 200 und einen Bearbeitungskopf 10 einer erfindungsgemäßen Vorrichtung zum Laserdurchstrahlschweißen. Die Mehrschichtfolie 200 und das Kunststoffhartteil 100 sind im vorliegenden Beispiel auf einer Arbeitsfläche (nicht gezeigt) aufeinander gelegt.

Der Bearbeitungskopf 10 besitzt eine Bearbeitungsseite 12, die in Fig. 1 auf die über dem Kunststoffhartteil 100 angeordnete Mehrschichtfolie 200 gerichtet ist. Die Bearbeitungsseite 12 wird von dem freien Ende eines hohlzylinderförmigen Austrittsschaftes 14 gebildet. Der Austrittsschaft 14 ist im vorliegenden Beispiel aus Polytetrafluorethylen (PTFE) gebildet. Im Austrittsschaft 14 ist als ein Lasertransparentes Anpressmittel eine Kugel 18 angeordnet, die von den Innenwänden des Austrittschaftes 14 geführt ist. Die Kugel ist aus Glas einer Dichte von 2,5 kg/dm³ und besitzt einen Durchmesser von 30 mm und ein Gewicht von 35 g. Die Kugel 18 besteht im vorliegenden Beispiel aus dem Glas N-BK 7. Ein von den Wänden des Austrittsschafts gebildeter Hohlraum 22 besitzt eine Länge, die größer ist als der Durchmesser der Kugel 18, eine zentrale Längsachse und hat auf seiner ganzen Länge einen Innendurchmesser von 30,05 mm.

Fig. 2 zeigt schematisch ein zweites Beispiel einer Schweißanordnung, bei der eine erfindungsgemäße Vorrichtung zum Laserdurchstrahlschweißen verwendet wird. Im zweiten Beispiel wird ein Bearbeitungskopf 11 eingesetzt, der die Elemente des Bearbeitungskopfes 10 aufweist und zusätzlich einen in den Austrittsschaft zu der Bearbeitungsseite gerichteten Druckfluidanschluss 24 für ein das Anpressmittel beaufschlagendes Anpressfluid aufweist. Als Druckfluid kann Druckluft verwendet werden.

Der Bearbeitungskopf 10 kann wie der Bearbeitungskopf 11 zusätzlich mit Einrichtungen 15 zum Einleiten, Führen, Fokussieren und/oder Formen des Laserstrahls versehen sein, wie eine Glasfaser, Spiegel oder Linsen, was schematisch in Fig. 2 dargestellt ist.

Als Kunststoff für das Kunststoffhartteil 100 kann jeder schweißbare Thermoplast verwendet werden, der bei der Verschweißung mit einem entsprechenden Folienstück ausreichend thermodynamisch verträglich ist. Im vorliegenden Beispiel besteht das Kunststoffhartteil 100 aus spritzgussfähigem Polypropylen (PP).

Die Mehrschichtfolie 200 ist flexibel und aus drei Schichten (nicht gezeigt) zusammengesetzt, wobei im vorliegenden Beispiel die Innenschicht die Fügeschicht ist. Die Mehrschichtfolie 200 besitzt folgende Schichtstruktur und Zusammensetzung:

| | | |
|---|---|---|
| Außenschicht | 30 µm | 100% PP-Copolymer mit Ethylenanteil |
| Mittelschicht | 200 µm | 50% SEBS (Styrol-Ethylen-Butadien-Styrol) |
| | | 50% PP-Copolymer mit Ethylenanteil |
| Innenschicht | 20 µm | 60 Gewichtsteile PP-Copolymer mit Ethylenanteil |
| | 80 µm | 80 Gewichtsteile SEBS |
| | | 500 ppm Absorber BASF Lumogen IR 788 |

Die Fügeschicht (Innenschicht) liegt in der in der Fig. 1 gezeigten Verbundteil-Schweißanordnung auf dem Kunststoffhartteil 100 auf. Die Fügeschicht ist mit ihrer Formulierung auf das Material des Hartteils im Sinne der Verschweißbarkeit abgestimmt. Die Fügeschicht weist gegenüber der Trägerschicht typischerweise eine geringere Schichtdicke auf, um die Temperaturentwicklung möglichst nur in der Nähe der Schweißzone entstehen zu lassen.

Die Fügeschicht enthält einen Absorber für Laserlicht, der das in die Mehrschichtfolie 200 eingestrahlte Laserlicht absorbiert und dadurch zur Erwärmung der Fügeschicht und der daran angrenzenden Bereiche des Kunststoffhartteils 100 und der Mehrschichtfolie 200 führt. Im vorliegenden Beispiel wird als Absorber Lumogen IR 788 der Firma BASF in einer Menge von 500 ppm, bezogen auf die Fügeschicht, verwendet. Lumogen IR 788 von BASF hat ein Absorptionsmaxium bei 788 nm.

Das eingesetzte Laserlicht wird von einem Diodenlaser (nicht gezeigt) erzeugt und weist ein Wellenlängenmaximum bei insbesondere 808 nm auf. Hierzu wird ein Neodym-dotierten Yttrium-Aluminium-Granat-Laser (Nd:YAG Laser) eingesetzt. Im vorliegenden Beispiel wird ein Diodenlaser Laserline LDF 1000-500 der Firma Laserline GmbH verwendet.

Im Betrieb wird der Bearbeitungskopf 10 oder 11 auf die zu verbindende Stelle derart aufgesetzt, dass der Austrittsschaft 14 von der Mehrschichtfolie beabstandet ist, die Kugel 18 aus der Austrittsöffnung 20 ragt und auf der Mehrschichtfolie 200 mit ihrem Eigengewicht aufliegt. So wird eine Anpresskraft von ungefähr 0,35 N auf die Mehrschichtfolie 200 erzeugt. Dann wird der Bearbeitungskopf 10 oder 11 über die Mehrschichtfolie geführt und die Kugel 18 auf der Mehrschichtfolie 200 gerollt. Dabei wird die Kugel 18 im Austrittsschaft 14 vom Bearbeitungskopf 10 entkoppelt bewegt und geführt. Die im Wesentlichen einzige ungefederte Masse im Bearbeitungskopf bildet die Kugel 18. Da die Kugel 18 innerhalb des Austrittsschaftes 14 parallel zur Längsachse des Hohlraums bewegbar ist, kann ein Toleranzausgleich sowohl hinsichtlich der Anpresskraft als auch hinsichtlich einer Höhenvariation der zu verschweißenden Stelle erfolgen. Durch das Anpressen passt sich die Folie 200 an die Konturen und Oberflächenunebenheiten des Kunststoffhartteils 100 an und wird an die Konturen und Oberflächenunebenheiten des Kunststoffhartteils angedrückt.

Bei Verwendung des Bearbeitungskopfes 11 der Fig. 2 wird die Kugel 18 zusätzlich mit Druckluft von ca. 30 mbar beaufschlagt, wodurch die Anpresskraft auf die Mehrschichtfolie verstärkt wird. Dadurch wird auf die Kunststofffügeteile eine Anpresskraft von ungefähr 2,5 N ausgeübt.

Während der Bearbeitungskopf 10 oder 11 über die Mehrschichtfolie 200 geführt wird, wird ein Laserstrahl 16 auf die Laser-transparente Kugel 18 und durch diese hindurch auf die zu verbindende Stelle gerichtet. Wie in Fig. 1 und 2 schematisch dargestellt ist, erzeugt das so auf die Kunststofffügeteile eingestrahlte Laserlicht eine Schweißnaht 17, in der die Kunststoffe der Fügeschicht der Mehrschichtfolie 200 und des Kunststoffhartteils 100 lokal aufgeschmolzen werden. Nach dem Abkühlen der Schweißzone sind die Mehrschichtfolie 200 und das Kunststoffhartteil 100 über die Schweißnaht 17 glatt, d.h. ohne Faltenbildung in der Folie, und fest miteinander verschweißt. Da die Anpresskraft des Bearbeitungskopfes gering ist und über die Kugel 18 und/oder die Druckluft fein dosiert werden kann, wird unter Einwirkung des Laserlichts die Schweißnaht 17 in hoher Güte hergestellt. Weil zudem auf die Schweißstelle nur eine geringe träge Masse wirkt, kann das Laserdurchstrahlschweißen mit einer hohen Dynamik, einer hohe Vorschubgeschwindigkeit und einem schnellen Ansprechverhalten durchgeführt werden.

## Patentansprüche

1. Vorrichtung zum Laserdurchstrahlschweißen zweier Kunststofffügeteile (100, 200), wobei mindestens eines der Kunststofffügeteile einen Absorber für Laserlicht enthält, umfassend
einen Bearbeitungskopf (10; 11) mit
einer Bearbeitungsseite (12),
einem bearbeitungsseitigen Austrittsschaft (14) für mindestens einen Laserstrahl (16), und
einem Laser-transparenten Anpressmittel (18) zum Aufeinander-Pressen der Kunststofffügeteile;
wobei das Laser-transparente Anpressmittel in dem Austrittsschaft von dem Bearbeitungskopf entkoppelt geführt ist und in Richtung und in Gegenrichtung der Bearbeitungsseite bewegbar ist; und
wobei der Austrittsschaft einen Innendurchmesser besitzt und das Anpressmittel einen Außendurchmesser besitzt, der kleiner ist als der Innendurchmesser des Austrittschafts; und
wobei der Austrittsschaft eine Austrittsöffnung (20) für den Laserstrahl besitzt, die Austrittsöffnung einen Durchmesser besitzt und das Anpressmittel einen Außendurchmesser besitzt, der dem Durchmesser der Austrittsöffnung entspricht.

2. Vorrichtung nach Anspruch 1, wobei der Austrittsschaft einen Hohlraum (22), bevorzugt einen zylinderförmigen Hohlraum, besitzt, in und/oder von dem das Anpressmittel geführt ist; und/oder wobei das Anpressmittel als Kugel gebildet ist; und/oder wobei das Anpressmittel einen Durchmesser im Bereich von 15 bis 50 mm aufweist.

3. Vorrichtung nach einem der vorstehenden Ansprüche,
wobei das Anpressmittel und die Austrittsöffnung aus Materialien bestehen, die aufeinander gleitfähig sind und/oder
wobei das Anpressmittel eine Dichte im Bereich von 1,5 bis 6 kg/dm³ aufweist.

4. Vorrichtung nach einem der vorstehenden Ansprüche,
wobei der Bearbeitungskopf einen in den Austrittsschaft zu der Bearbeitungsseite gerichteten Druckfluidanschluss (24) für ein das Anpressmittel beaufschlagendes Anpressfluid aufweist; und/oder
wobei der Bearbeitungskopf und/oder der Austrittsschaft optische Einrichtungen (15) zum Einleiten, Führen, Fokussieren und/oder Formen des Laserstrahls aufweisen.

5. Verfahren zum Herstellen einer Schweißverbindung zweier Kunststofffügeteile durch Laserdurchstrahlschweißen,
wobei mindestens eines der Kunststofffügeteile einen Absorber für Laserlicht enthält, umfassend
aufeinander Anordnen der zwei Kunststofffügeteile (100, 200);
Aufeinander-Pressen und Bestrahlen der aufeinander angeordneten Kunststofffügeteile mit Laserlicht unter Einsatz einer Vorrichtung nach einem der vorstehenden Ansprüche;
wobei im Bearbeitungskopf (10; 11) der Vorrichtung das Laser-transparente Anpressmittel (18) in dem Austrittsschaft (14) von dem Bearbeitungskopf entkoppelt geführt wird.

6. Verfahren nach Anspruch 5, wobei durch das Eigengewicht des Anpressmittels auf die Kunststofffügeteile eine Anpresskraft ausgeübt wird.

7. Verfahren nach einem der Ansprüche 5 und 6,
wobei das Anpressmittel im Austrittsschaft mit einem zur Bearbeitungsseite gerichteten Anpressfdruckfluid, insbesondere mit Druckluft, beaufschlagt wird.

8. Verfahren nach einem der Ansprüche 5 bis 7,
wobei auf die Kunststofffügeteile eine Anpresskraft im Bereich von 0,01 N bis 1000 N ausgeübt wird; und/oder wobei das Anpressmittel mit einem Anpressdruck im Bereich von 0 bis 7 bar beaufschlagt wird.

9. Verfahren nach einem der Ansprüche 5 bis 8,
wobei das Anpressmittel in Richtung und in Gegenrichtung der Bearbeitungsseite bewegt wird; und/oder wobei der Austrittsschaft eine Längsachse besitzt und das Anpressmittel parallel zur Längsachse des Austrittsschaftes bewegt wird; und/oder
wobei der Austrittsschaft einen Hohlraum (22), bevorzugt einen zylinderförmigen Hohlraum, besitzt, in und/oder vom dem das Anpressmittel geführt wird; und/oder wobei als das Anpressmittel eine Kugel eingesetzt wird; und/oder
wobei das Verfahren unter Schutzgas durchgeführt wird.

10. Verfahren nach einem der Ansprüche 5 bis 9,
wobei die Kunststofffügeteile eine Mehrschichtfolie (200), die eine Fügeschicht aufweist, und ein Kunststoffhartteil (100) umfassen, und die Fügeschicht den Absorber für Laserlicht enthält.

11. Verfahren nach Anspruch 10,
wobei als das Kunststoffhartteil ein Hartteil aus einem Kunststoff, bevorzugt aus einem spritzgussfähigem Kunststoff, ausgewählt aus der Gruppe, bestehend aus Polyethylen, Polypropylen, Polyisopren und deren Blends und Copolymere, PET sowie Polycarbonate, eingesetzt wird; und/oder
wobei als die Fügeschicht der Mehrschichtfolie eine Schicht aus einem Material, ausgewählt aus der Gruppe, bestehend aus Polypropylen, Polyethylen, Polyisopren, olefinische Styrolblockcopolymere, deren Blends sowie Copolymere davon, eingesetzt wird; und/oder wobei als die Fügeschicht eine Schicht einer Dicke von 10 bis 100 µm eingesetzt wird.

12. Verfahren nach einem der Ansprüche 5 bis 11,
wobei als der Absorber für Laserlicht ein IR-Absorber eingesetzt wird, der IR-Strahlung, insbesondere im Bereich von 770 - 1500 nm, absorbiert; und/oder wobei der Absorber für Laserlicht in einer Menge von 50 bis 700 ppm, bezogen auf das Gewicht der Fügeschicht, eingesetzt wird; und/oder
wobei Laserlicht eines Nd:YAG-Lasers und/oder Laserlicht im IR-Bereich, insbesondere im Bereich von 770 - 1500 nm, eingesetzt wird.

## Claims

1. Apparatus for laser transmission welding of two plastic joining parts (100, 200), wherein at least one of the plastic joining parts comprises an absorber for laser light, comprising
a processing head (10; 11) with
a processing side (12),
a processing-side outlet shaft (14) for at least one laser beam (16), and
a laser-transparent pressing means (18) for pressing the plastic- joining parts;
wherein the laser-transparent pressing means in the outlet shaft is guided decoupled from the processing head and is movable in the direction and in the opposite direction of the processing side; and
wherein the outlet shaft has an inner diameter and the pressing means has an outer diameter which is smaller than the inner diameter of the outlet shaft; and
wherein the outlet shaft has an outlet opening (20) for the laser beam, the outlet opening has a diameter and the pressing means has an outer diameter corresponding to the diameter of the outlet opening.

2. Device according to claim 1, wherein the outlet shaft has a cavity, preferably a cylindrical cavity, in and/or from which the pressing means is guided; and/or
wherein the pressing means is formed as a ball; and/or
wherein the pressing means has a diameter in the range of 15 to 50 mm.

3. Device according to one of the preceding claims, wherein the pressing means and the outlet opening consist of materials which are slidable on one another and/or
wherein the pressing agent has a density in the range of 1.5 to 6 kg / dm³.

4. Device according to one of the preceding claims, wherein the processing head has a pressure fluid port (24) directed into the outlet shaft toward the processing side for a pressure fluid acting upon the pressure means; and/or
wherein the processing head and/or the outlet shaft have optical means (15) for introducing, guiding, focusing and/or shaping the laser beam.

5. A method for producing a welded joint of two plastic joining parts by laser transmission welding, wherein at least one of the plastic joining parts comprises an absorber for laser light, comprising
arranging the two plastic joining parts (100, 200) on each other;
pressing onto each other and irradiating the juxtaposed plastic joining parts with laser light using a device according to one of the preceding claims;
wherein in the processing head (10; 11) of the device, the laser-transparent pressing means (18) in the outlet shaft (14) is guided decoupled from the processing head.

6. The method of claim 5, wherein a pressing force on the plastic joining parts is exerted by the net weight of the pressing means.

7. The method according to any one of claims 5 and 6, wherein the pressing means in the outlet shaft is acted upon with a pressing fluid directed to the processing side, in particular with compressed air.

8. The method according to any one of claims 5 to 7, wherein a pressure force in the range of 0.01 N to 1000 N is exerted on the plastic joining parts; and/or wherein the pressing means is acted upon with a pressing pressure in the range of 0 to 7 bar.

9. The method according to any one of claims 5 to 8,
wherein the pressing means is moved in the direction and in the opposite direction of the pressing side; and/or
wherein the outlet shaft has a longitudinal axis and the pressing means is moved parallel to the longitudinal axis of the outlet shaft; and/or
wherein the outlet shaft has a cavity (22), preferably a cylindrical cavity, in and/or from which the pressure means is guided; and/or
wherein as the pressing means a ball is used; and/or
the process is carried out under protective gas.

10. The method according to any one of claims 5 to 9, wherein the plastic joining parts comprise a multilayer film (200) having a joining layer and a plastic hard part (100), and the joining layer contains the absorber for laser light.

11. The method according to claim 10, wherein as the plastic hard part, a hard part of a plastic, preferably of an injection-moldable plastic, selected from the group consisting of polyethylene, polypropylene, polyisoprene and their blends and copolymers, PET and polycarbonates, is used; and/or
wherein as the joining layer of the multi-layer film, a layer of a material selected from the group consisting of polypropylene, polyethylene, polyisoprene, olefinic styrenic block copolymers, their blends and copolymers thereof is used; and/or
wherein as the joining layer a layer with a thickness of 10 to 100 µm is used.

12. The method according to any one of claims 5 to 11, wherein as the absorber for laser light, an IR absorber is used which absorbs IR radiation, in particular in the range of 770-1500 nm; and/or
wherein the absorber for laser light is used in an amount of 50 to 700 ppm based on the weight of the joining layer; and/or
wherein laser light of a Nd:YAG laser and/or laser light in the IR range, in particular in the range of 770-1500 nm, is used.

## Revendications

1. Dispositif de soudage par transmission de laser de deux pièces de jonction en plastique (100, 200), dans lequel au moins l'une des pièces de jonction en plastique comprend un absorbeur pour lumière laser, comprenant
une tête de traitement (10; 11) avec
un côté de traitement (12),
un arbre de sortie côté traitement (14) pour au moins un faisceau laser (16), et
un moyen de pression (18) transparent au laser pour presser les parties de jonction en plastique;
dans lequel le moyen de pression transparent au laser dans l'arbre de sortie est guidé découplé de la tête de traitement et est mobile dans la direction du et dans la direction opposée du côté de traitement; et
dans lequel l'arbre de sortie a un diamètre interne et le moyen de pression a un diamètre externe qui est plus petit que le diamètre interne de l'arbre de sortie; et
dans lequel l'arbre de sortie a une ouverture de sortie (20) pour le faisceau laser, l'ouverture de sortie a un diamètre et le moyen de pression a un diamètre externe correspondant au diamètre de l'ouverture de sortie.

2. Dispositif selon la revendication 1, dans lequel l'arbre de sortie a une cavité, de préférence une cavité cylindrique, dans et/ou à partir de laquelle les moyens de pression sont guidés; et/ou
dans lequel le moyen de pression est formé sous la forme d'une bille; et/ou
dans lequel le moyen de pression a un diamètre compris entre 15 et 50 mm.

3. Dispositif selon l'une des revendications précédentes, dans lequel le moyen de pression et l'ouverture de sortie sont constitués de matériaux coulissants l'un sur l'autre et/ou
dans lequel le moyen de pression a une densité dans la plage de 1,5 et 6 kg / dm³.

4. Dispositif selon l'une des revendications précédentes, dans lequel la tête de traitement a un orifice de fluide sous pression (24) dirigé dans l'arbre de sortie vers le côté de traitement pour un fluide sous pression agissant sur le moyen de pression; et/ou
dans lequel la tête de traitement et/ou l'arbre de sortie comportent des moyens optiques (15) pour introduire, guider, focaliser et/ou mettre en forme le faisceau laser.

5. Procédé pour la production d'un joint soudé de deux pièces de jonction en plastique par soudage par transmission de laser, dans lequel au moins l'une des pièces de jonction en matière plastique comprend un absorbeur pour lumière laser, comprenant
agencer les deux pièces de jonction en plastique (100, 200) l'une sur l'autre;
presser l'un sur l'autre et irradier les parties de jonction en plastique juxtaposées avec de la lumière laser en utilisant un dispositif selon l'une des revendications précédentes;
dans lequel dans la tête de traitement (10; 11) du dispositif, le moyen de pression (18) transparent au laser dans l'arbre de sortie (14) est guidé de manière découplé de la tête de traitement.

6. Procédé selon la revendication 5, dans lequel une force de pression sur les pièces de jonction en plastique est exercée par le poids net du moyen de pression.

7. Procédé selon l'une des revendications 5 et 6, dans lequel le moyen de pression dans l'arbre de sortie est sollicité avec un fluide de pressage dirigé vers le côté de traitement, en particulier avec de l'air comprimé.

8. Procédé selon l'une des revendications 5 à 7, dans lequel une force de pression dans la plage de 0,01 N à 1000 N est exercée sur les pièces de jonction en plastique; et/ou dans lequel le moyen de pression est sollicité avec une pression dans la plage de 0 à 7 bars.

9. Procédé selon l'une des revendications 5 à 8,
dans lequel le moyen de pression est déplacé dans la direction du et dans la direction opposée du côté de pression; et/ou
dans lequel l'arbre de sortie a un axe longitudinal et le moyen de pression est déplacé parallèlement à l'axe longitudinal de l'arbre de sortie; et/ou
dans lequel l'arbre de sortie a une cavité (22), de préférence une cavité cylindrique, dans et/ou à partir de laquelle les moyen de pression est guidé ; et/ou
dans lequel, en tant que moyen de pression, une bille est utilisée; et/ou le procédé est effectué sous gaz protecteur.

10. Procédé selon l'une des revendications 5 à 9, dans lequel les pièces de jonction en plastique comprennent un film multicouche (200) comportant une couche de jonction et une partie dure en plastique (100), et la couche de jonction contient l'absorbant pour lumière laser.

11. Procédé selon la revendication 10, dans lequel, en tant que partie dure en plastique, une partie dure d'une matière plastique, de préférence d'une matière plastique moulable par injection, choisie dans le groupe constitué de polyéthylène, polypropylène, polyisoprène et leurs mélanges et les polycarbonates, est utilisée; et/ou
dans lequel, en tant que couche de jonction du film multicouche, une couche d'un matériau choisi dans le groupe constitué par le polypropylène, le polyéthylène, le polyisoprène, des copolymères blocs styréniques oléfiniques, leurs mélanges et leurs copolymères est utilisée; et/ou
dans lequel, en tant que couche de jonction du film multicouche, une couche d'une épaisseur de 10 à 100 µm est utilisée.

12. Procédé selon l'une quelconque des revendications 5 à 11, dans lequel, en tant qu'absorbeur pour la lumière laser, on utilise un absorbeur IR qui absorbe le rayonnement IR, en particulier dans la plage de 770 à 1500 nm; et/ou
dans lequel l'absorbeur pour lumière laser est utilisé en une quantité de 50 à 700 ppm sur la base du poids de la couche de jonction; et/ou
dans lequel la lumière laser d'un laser Nd: YAG et/ou d'une lumière laser dans la plage IR, en particulier dans la plage de 770 à 1500 nm, est utilisée.
